# EUROPEAN PATENT APPLICATION

(11) **EP 2 645 710 A1**
(43) Date of publication of application: **02.10.2013**
(21) Application number: 11843770.6
(22) Date of filing: 25.10.2011
(51) Int. Cl.: H04N 7/15, H04N 7/18, H04N 7/26

(54) **METHOD FOR MONITORING TERMINAL THROUGH IP NETWORK AND MCU**

(30) Priority: 24.11.2010 CN 201010560070
(71) Applicant: ZTE Corporation, Shenzhen, Guangdong 518057 (CN)
(72) Inventor: WANG, Yuan, Guangdong 518057 (CN)
(74) Representative: Vogel, Andreas
(86) International application number: PCT/CN2011/081289
(87) International publication number: WO 2012/068940

(57) **Abstract**

A method for monitoring a terminal through an IP network, and an MCU are disclosed, which are applied to a video conference system. The method comprises: acquiring data from respective terminals, wherein the terminals comprise at least one of an E1 terminal and a 4×E1 terminal; converting the acquired data into data in an IP protocol format; and packaging the converted data and sending the packaged data to a monitoring device through an IP network. Through the technical solution provided by the present invention, different types of video and audio data can be converted into a uniform format and then sent to a PC, thereby meeting the demand that the monitoring system supports multiple types of audio and video data.

## Description

### Technical Field

The present invention relates to the communication field and more specifically to a method for monitoring a terminal through an Internet Protocol (IP) network, and a Multipoint Control Unit (MCU).

### Background

Video conference systems realize a communication scene in which conference attendees gather together virtually to speak out freely and the speaker and the video source can be switched freely during the conference to achieve a full interaction.

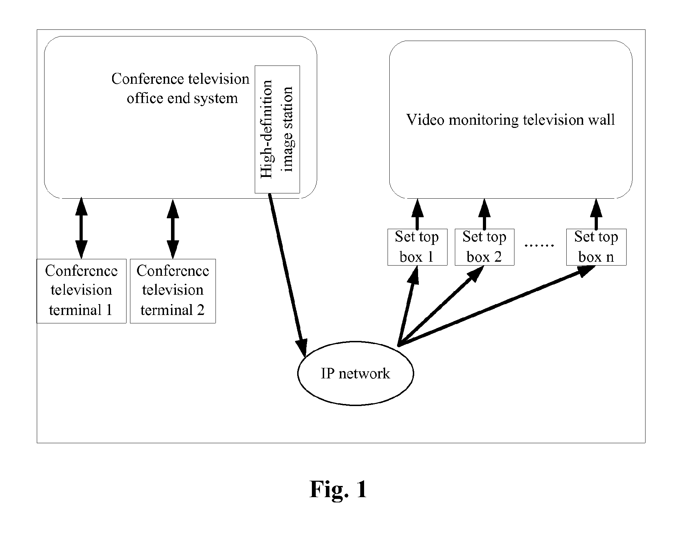

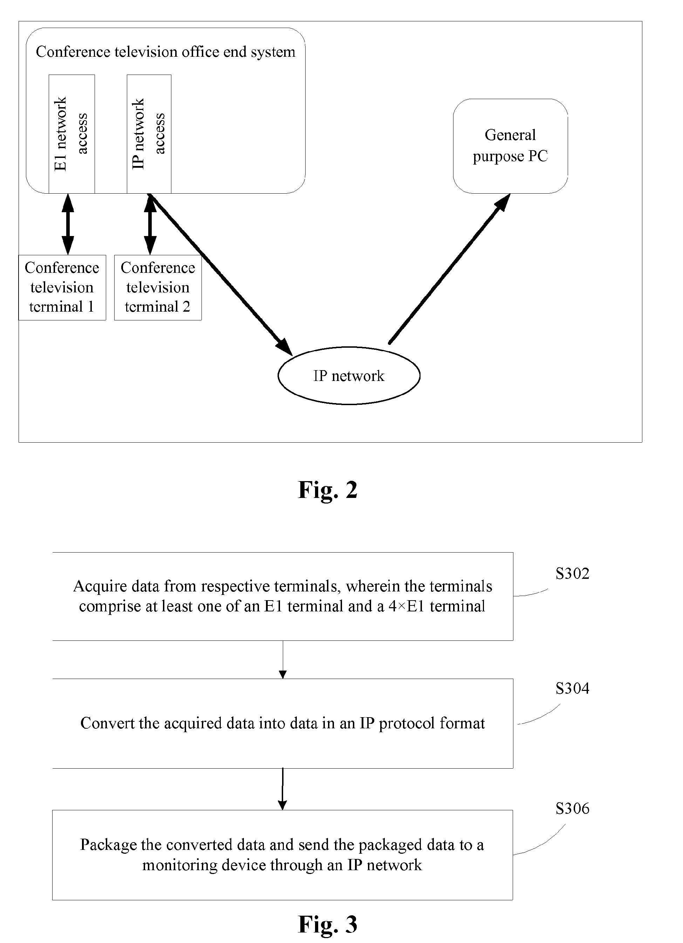

In order to manage and monitor conferences centrally, a technical scheme is needed which is capable of centrally monitoring each terminal participating in the conference. At present, there are two modes available for achieving a centralized monitoring. The first mode is to monitor by using a dedicated Video Decode Board; and the second mode is to monitor by using a general Personal Computer (PC). Systemic architectures for the two monitoring modes are described below with reference to Fig. 1 and Fig. 2.

Fig. 1 is an architecture diagram of a system using a dedicated Video Decode Board monitoring mode according to the related art. As shown in Fig. 1, in the system, a dedicated receiving device (such as a television or a set top box) and a data link constitute a television wall, which receives data from terminals in the conference to implement monitoring. This mode is superior in monitoring presence effect but is expensive as a dedicated receiving device and a data link are employed to monitor terminals of different types (IP terminal, E1 terminal and 4×E1 terminal) as well as audio and video data of different types.

Fig. 2 is an architecture diagram of a system using a general purpose PC monitoring mode according to the related art. As shown in Fig. 2, in the system, a general purpose PC receives data from terminals through the widespread IP network to implement monitoring. By installing a media receiving module (WEB monitoring plug-in) on the general purpose PC, the data from multiple terminals can be received and displayed at the same time. This mode, although inferior to the first mode in presence effect, is low in consumption cost as only one general purpose PC is required to be configured, and is flexible in monitored occasions as any place can be monitored as long as there is an IP network and a PC.

However, monitoring using a general purpose PC leads to the following problems: (1) as limited to an IP network, only IP terminals can be monitored, and an E1 terminal or a 4×E1 terminal cannot be monitored; (2) as decoding video data of terminals consumes much performance, the number of the terminals that can be monitored is limited to the performance of the PC and the video quality of the terminals; and (3) it is difficult for the media receiving module configured in the PC to support the numerous video and audio types of the terminals.

### Summary

In view of the above problems existing in the related art, for example, a general purpose PC can merely monitor an IP terminal but not an E1 terminal or a 4×E1 terminal, the present invention provides a method for monitoring a terminal through an IP network, and an MCU to address at least one of the problems above.

In accordance with an aspect of the present invention, there is provided a method for monitoring a terminal through an IP network.

The method for monitoring a terminal through an IP network according to the present invention is applied to a video conference system. The method comprises: acquiring data from respective terminals, wherein the terminals comprise at least one of an E1 terminal and a 4×E1 terminal; converting the acquired data into data in an IP protocol format; and packaging the converted data and sending the packaged data to a monitoring device through an IP network.

In the above method, when a terminal of the terminals is a 4×E1 terminal and the acquired data are video data, converting the acquired data into the data in the IP protocol format comprises: de-binding the acquired data; and performing a Transport Stream (TS) de-multiplexing processing on the de-bound data.

In the above method, when a terminal of the terminals is an E1 terminal and the acquired data are video data, converting the acquired data into the data in the IP protocol format comprises: de-multiplexing the acquired data; and forming one frame of image with the de-multiplexed data and packaging the frame of image.

In the above method, before sending the converted data to the monitoring device, the method further comprises: performing code rate conversion or media format conversion on the acquired data.

In the above method, the acquired data are video data, and performing the code rate conversion or the media format conversion on the acquired data comprises: forming one frame of image with the acquired data and performing decoding; and encoding and packaging decoded data.

In the above method, the monitoring device is a Personal Computer (PC).

In accordance with an aspect of the present invention, there is provided an MCU.

The MCU according to the present invention is applied to a video conference system and the MCU comprises: an acquisition module configured to acquire data from respective terminals, wherein the terminals comprise at least one of an E1 terminal and a 4×E1 terminal; a protocol conversion module configured to convert the data acquired by the acquisition module into data in an Internet Protocol (IP) protocol format; and a sending module configured to package the converted data and send the packaged data to a monitoring device through an IP network.

In the above MCU, the protocol conversion module comprises: a de-binding unit configured to de-bind video data acquired from the 4×E1 terminal; and a first de-multiplexing unit configured to perform a Transport Stream (TS) de-multiplexing processing on the video data de-bound by the de-binding unit.

In the above MCU, the protocol conversion module comprises: a second de-multiplexing unit configured to de-multiplex video data acquired from the E1 terminal; and a generation unit configured to form one frame of image with the video data de-multiplexed by the second de-multiplexing unit and package the frame of image.

In the above MCU, the MCU further comprises: a media conversion module configured to perform code rate conversion or media format conversion on the acquired data.

In the above MCU, the media conversion module comprises: a decoding unit configured to form one frame of image with acquired video data and then perform decoding; and an encoding unit configured to encode and package the video data output from the decoding unit.

By virtue of the present invention, the data acquired from E1 terminal(s) and/or 4×E1 terminal(s) are converted into data in an IP protocol format, the converted data are packaged and then sent to a monitoring device, thereby addressing the problem existing in the related art that a general purpose PC cannot monitor an E1 terminal or a 4×E1 terminal. The present invention also converts different types of video and audio data into data in a uniform format and sends the converted data to a PC, thus meeting the demand that a monitoring system supports multiple types of audio and video data.

### Brief description of the drawings

Drawings, provided for further understanding of the present invention and forming a part of the specification, are used to explain the present invention together with embodiments of the present invention rather than to limit the present invention, wherein:
Fig. 1 is an architecture diagram of a system using a dedicated Video Decode Board monitoring mode according to the related art;
Fig. 2 is an architecture diagram of a system using a general purpose PC monitoring mode according to the related art;
Fig. 3 is a flow chart of a method for monitoring a terminal through an IP network according to an embodiment of the present invention;
Fig. 4 is an architecture diagram of a system using a general purpose PC monitoring mode according to a preferred embodiment of the present invention;
Fig. 5 is a flow chart of performing communication protocol conversion for video data from a 4×E1 terminal according to a preferred embodiment of the present invention;
Fig. 6 is a flow chart of performing communication protocol conversion for video data from an E1 terminal according to a preferred embodiment of the present invention;
Fig.7 is a flow chart of audio media conversion according to a preferred embodiment of the present invention;
Fig. 8 is a general flow chart of a method for monitoring a terminal through an IP network according to a preferred embodiment of the present invention;
Fig. 9 is a block diagram of the structure of an MCU according to an embodiment of the present invention; and
Fig. 10 is a block diagram of the structure of an MCU according to a preferred embodiment of the present invention.

### Detailed description of the embodiments

A detailed description is given to the preferred embodiments of the invention with reference to the accompanying drawings. It should be noted that the embodiments described herein and the features thereof can be combined with each other on condition that no conflict is caused.

Fig. 3 is a flow chart of a method for monitoring a terminal through an IP network according to an embodiment of the present invention. As shown in Fig. 3, the method mainly comprises the following steps:
Step S302: data from respective terminals are acquired, wherein the terminals comprise at least one of an E1 terminal and a 4×E1 terminal;
Step S304: the acquired data are converted into data in an IP protocol format;
Step S306: the converted data are packaged and then sent to a monitoring device through an IP network.

By virtue of the above method, the data acquired from E1 terminal(s) and/or 4×E1 terminal(s) are converted into data in an IP protocol format, the converted data are packaged and then sent to a monitoring device, thereby addressing the problem existing in the related art that a general purpose PC cannot monitor an E1 terminal or a 4×E1 terminal. The present invention also converts different types of video and audio data into data in a uniform format and sends the converted data to a PC, thus meeting the demand that a monitoring system supports multiple types of audio and video data.

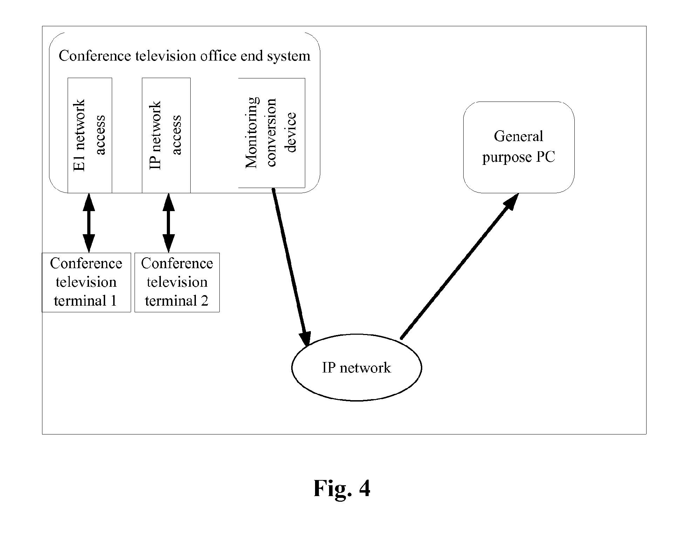

In the specific implementation process, a monitoring conversion device may be added in an MCU to convert the data acquired by the MCU into data in an IP protocol format. Specific deployment of the monitoring conversion device may refer to Fig. 4.

Preferably, the data acquired from the terminals include audio data and video data. The protocol format of audio data from an IP terminal, an E1 terminal or a 4×E1 terminal may be converted when a conference television office end system is accessed; or, the protocol format of the data may be converted by the added monitoring conversion device before the data are sent. The conversion of the protocol format of the audio data can be achieved through the conventional art and is therefore not described herein repeatedly.

Preferably, when the terminal is a 4×E1 terminal and the acquired data are video data, Step S304 may comprise the following processing:
(1) the acquired data are de-bound; and
(2) a TS de-multiplexing processing is performed on the de-bound data.

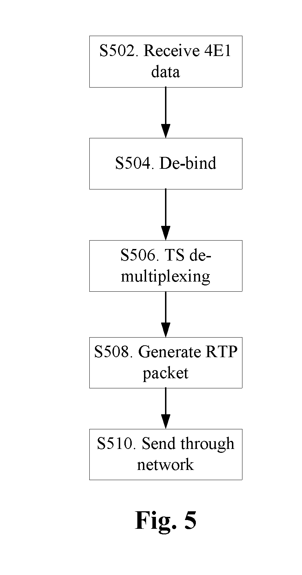

The aforementioned preferred embodiment is described below with reference to Fig. 5.

Fig. 5 is a flow chart of performing communication protocol conversion for video data from a 4×E1 terminal according to a preferred embodiment of the present invention. As shown in Fig. 5, the flow mainly comprises the following processing:
Step S502: video data are received from a 4×E1 terminal;
Step S504: the received video data are de-bound;
Step S506: a TS de-multiplexing processing is performed on the de-bound data;
Step S508: a Real-time Transport Protocol (RTP) packet is generated with the data subjected to the TS de-multiplexing processing; and
Step S510: the generated RTP packet is sent to a monitoring device (e.g. a general purpose PC) through the IP network.

Preferably, when the terminal is an E1 terminal and the acquired data are video data, Step S304 may comprise the following processing:
(1) the acquired data are de-multiplexed; and
(2) one frame of image is formed with the de-multiplexed data and the frame of image is packaged.

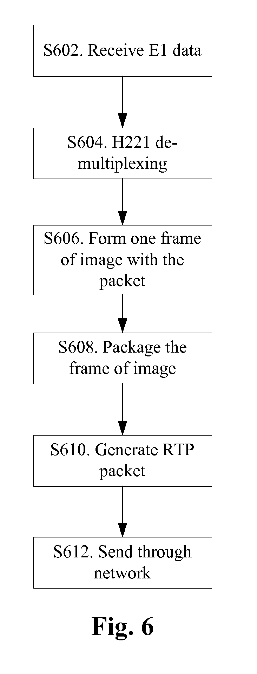

The aforementioned preferred embodiment is described below with reference to Fig. 6.

Fig. 6 is a flow chart of performing communication protocol conversion for video data from an E1 terminal according to a preferred embodiment of the present invention. As shown in Fig. 6, the flow mainly comprises the following processing:
Step S602: video data are received from an E1 terminal;
Step S604: an H221 de-multiplexing processing is performed on the received video data;
Step S606: one frame of image is formed with the de-multiplexed data;
Step S608: the frame of image is packaged;
Step S610: an RTP packet is generated with the packaged data; and
Step S612: the generated RTP packet is sent to a monitoring device (e.g. a general purpose PC) through the IP network.

Preferably, before the converted data are sent to the monitoring device, the method may further comprise a processing of performing code rate conversion or media format conversion on the acquired data (that is, performing media conversion on the acquired data).

In the specific implementation process, the data acquired by the MCU may be high-definition data. In order to reduce the performance consumption of the monitoring device (e.g. a PC), the converted data may be subjected to media conversion (that is, code rate reduction) before the converted data are sent.

If the acquired data are video data, then performing the code rate conversion on the acquired data may comprise:
(1) one frame of image is formed with the acquired data and decoding processing is performed; and
(2) the decoded data are encoded and packaged.

In the specific implementation process, if the acquired data are audio data, the acquired data, after being decoded, are also subjected to a sampling rate conversion and then encoded. The specific processing can be obtained in the related art and is therefore not described here repeatedly.

Through the processing above, video data of a relative high quality are converted into video data of a relative low quality and are then sent to a PC, so that the performance consumption of the PC is reduced, thus achieving a purpose of monitoring more terminals.

The media conversion is classified into audio data conversion and video data conversion. As to the audio data conversion, formats such as G711A, G711U, G722, G723, G728, G729, ZTE-BA and AAC can be converted into a uniform format G711A.

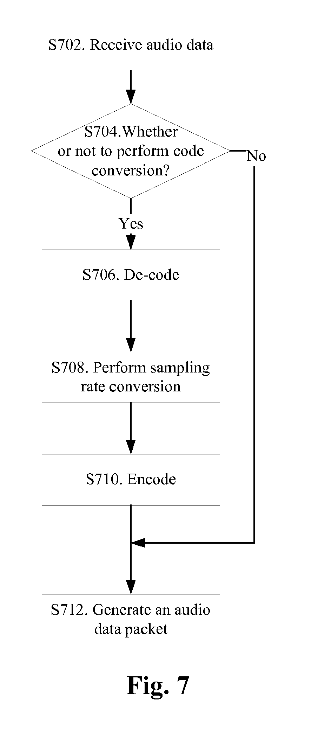

In the specific implementation process, the audio data from an IP terminal, an E1 terminal and a 4×E1 terminal are converted in a substantially same way. The conversion is described below with reference to Fig. 7.

Fig.7 is a flow chart of audio media conversion according to a preferred embodiment of the present invention. As shown in Fig. 7, the audio media conversion method mainly comprises the following processing.
Step S702: audio data from an IP terminal, an E1 terminal and/or a 4×E1 terminal are received.
Step S704: it is determined whether or not it is required to perform media conversion on the audio data according to the actual situation, if so, Step S706 is executed; otherwise, Step S712 is executed.
Step S706: the audio data are de-coded.
Step S708: sampling rate conversion is performed on the decoded data.

In the specific implementation process, the sampling rate of the decoded data can be reduced, so as to reduce the performance consumption of the monitoring device during decoding.
Step S710: after the sampling rate conversion is performed on the decoded data, encoding is performed.
Step S712: an audio data packet is generated with the encoded data.

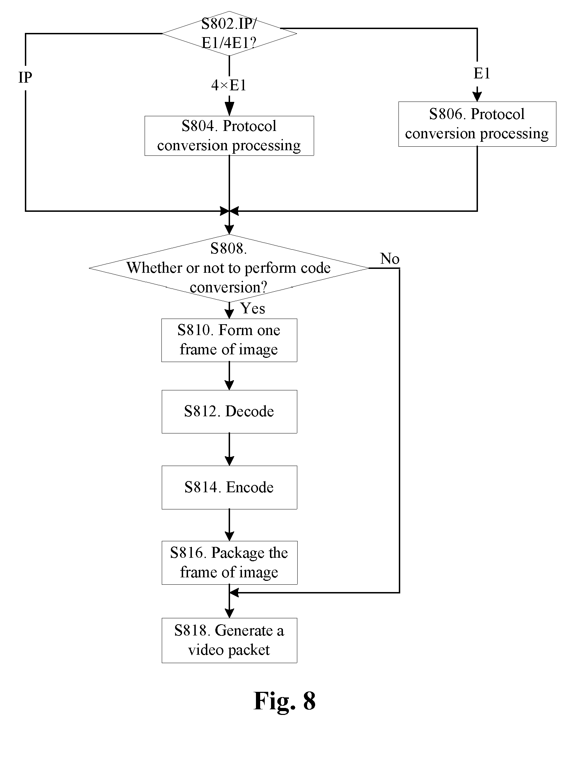

Fig. 8 is a general flow chart of a method for monitoring a terminal through an IP network according to a preferred embodiment of the present invention. The terminals include an IP terminal, an E1 terminal and a 4×E1 terminal. As shown in Fig. 8, the method for monitoring a terminal through an IP network mainly comprises the following processing.
Step S802: video data from respective terminals are acquired, it is determined whether or not the data include data from an IP terminal, data from a 4×E1 terminal and data from an E1 terminal, Step S808 is executed if the data include data from an IP terminal, Step S804 is executed if the data include data from a 4×E1 terminal, and Step S806 is executed if the data includes data from an E1 terminal.
Step S804: a protocol conversion processing is performed for the data from the 4×E1 terminal in the way which is specifically illustrated in Fig. 5 and is therefore not repeatedly described here.
Step S806: a protocol conversion processing is performed for the data from the E1 terminal in the way which is specifically illustrated in Fig. 6 and is therefore not repeatedly described here.
Step S808: it is determined whether or not to perform media conversion, if so, Step S810 is executed, otherwise, Step S818 is executed.
Step S810: one frame of image is formed with the video data subjected to the media conversion.
Step 812: a decoding processing is performed.
Step 814: an encoding processing is performed.

It should be noted that if the data are audio data, then the sampling rate of the audio data should be converted after the decoding processing and before the coding processing.
Step S816: the frame of image is packaged.
Step S818: a video packet is generated.

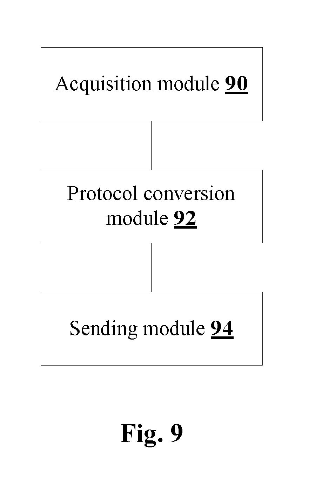

Fig. 9 is a block diagram of the structure of an MCU according to an embodiment of the present invention. As shown in Fig. 9, the MCU comprises: an acquisition module 90, a protocol conversion module 92 and a sending module 94.

The acquisition module 90 is configured to acquire data from respective terminals, wherein the terminals comprise at least one of: an E1 terminal and a 4×E1 terminal.

The protocol conversion module 92 is configured to convert the data acquired by the acquisition module into data in an IP protocol format.

The sending module 94 is configured to package the converted data and send the packaged data to a monitoring device through an IP network.

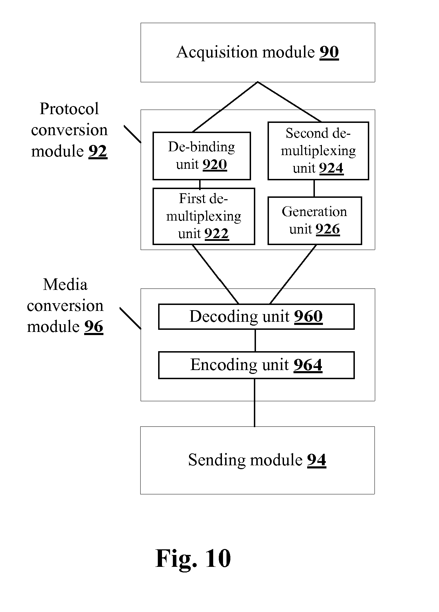

Preferably, as shown in Fig. 10, the protocol conversion module 92 may further comprise: a de-binding unit 920 configured to de-bind video data acquired from a 4×E1 terminal; and a first de-multiplexing unit 922 configured to de-multiplex the de-bound video data.

Preferably, as shown in Fig. 10, the protocol conversion module 92 may further comprise: a second de-multiplexing unit 924 configured to de-multiplex video data acquired from an E1 terminal; and a generation unit 926 configured to form one frame of image with the video data de-multiplexed by the second de-multiplexing unit and package the frame of image.

Preferably, as shown in Fig. 10, the multipoint control unit may further comprise: a media conversion module 96 configured to perform code rate conversion or media format conversion on the acquired data.

Preferably, as shown in Fig. 10, the media conversion module 96 comprises: a decoding unit 960 configured to form one frame of image with the acquired video data and then perform decoding; and an encoding unit 964 configured to encode the video data output from the decoding unit and package the encoded data.

The protocol conversion module 92 and the media conversion module 96 may be both arranged in the monitoring conversion device added in the MCU shown in Fig. 4.

The aforementioned preferred embodiment is described below with reference to Fig. 4.

The method for monitoring a terminal through an IP network using a PC mainly comprises the following steps.

Step 1: MCU holds a video conference.

Step 2: An E1 terminal accesses a conference television office end device (that is, the aforementioned MCU) through an E1 access device, a 4×E1 terminal accesses the conference television office end device (that is, the aforementioned MCU) through an E1 access device, and an IP terminal accesses the conference television office end device (that is, the aforementioned MCU) through an IP access device, and the video and/or audio of the terminal is monitored.

Step 3: the monitoring conversion device in the conference television office end device acquires terminal data from the E1 access device(s) and the IP access device, converts the E1 and 4×E1 communication protocol, i.e. H.320, into the IP protocol, i.e. H.323, and determines whether or not to perform media conversion according to the requirement.

Step 4: the monitoring conversion device sends the converted terminal data to a monitoring PC.

Step 5: the general monitoring PC calls a media receiving module to decode and present the received data.

In conclusion, by virtue of the embodiments provided in the present invention, a purpose of monitoring an IP terminal, an E1 terminal and a 4×E1 terminal through an IP network is realized. Moreover, the format and the rate of video and audio data of the terminals may be converted according to requirements, and the converted data are sent to a media receiving module (installed on a PC) so as to meet demands of the media receiving module. In this way, by converting video data of a relative high quality into video data of a relative low quality and then sending the video data to the media receiving module on a PC, the performance consumption of the PC is reduced without degrading the monitoring effect, so that the PC can monitor more terminals. At the same time, different types of video and audio data may be converted into data of the same type and then sent to the media receiving module on the PC, so that video and audio data of different types can be supported.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for monitoring a terminal through an Internet Protocol (IP) network, **characterized in that** the method is applied to a video conference system and the method comprises:
acquiring data from respective terminals, wherein the terminals comprise at least one of an E1 terminal and a 4×E1 terminal;
converting the acquired data into data in an IP protocol format; and
packaging the converted data and sending the packaged data to a monitoring device through an IP network.

2. The method according to claim 1, **characterized in that** when a terminal of the terminals is a 4×E1 terminal and the acquired data are video data, converting the acquired data into the data in the IP protocol format comprises:
de-binding the acquired data; and
performing a Transport Stream (TS) de-multiplexing processing on the de-bound data.

3. The method according to claim 1, **characterized in that** when a terminal of the terminals is an E1 terminal and the acquired data are video data, converting the acquired data into the data in the IP protocol format comprises:
de-multiplexing the acquired data; and
forming one frame of image with the de-multiplexed data and packaging the frame of image.

4. The method according to claim 1, **characterized in that** before sending the converted data to the monitoring device, the method further comprises:
performing code rate conversion or media format conversion on the acquired data.

5. The method according to claim 4, **characterized in that** the acquired data are video data, and performing the code rate conversion or the media format conversion on the acquired data comprises:
forming one frame of image with the acquired data and performing decoding; and
encoding and packaging decoded data.

6. The method according to any one of claims 1 to 5, **characterized in that** the monitoring device is a Personal Computer (PC).

7. A Multipoint Control Unit (MCU), **characterized in that** the MCU is applied to a video conference system and the MCU comprises:
an acquisition module configured to acquire data from respective terminals, wherein the terminals comprise at least one of an E1 terminal and a 4×E1 terminal;
a protocol conversion module configured to convert the data acquired by the acquisition module into data in an Internet Protocol (IP) protocol format; and
a sending module configured to package the converted data and send the packaged data to a monitoring device through an IP network.

8. The MCU according to claim 7, **characterized in that** the protocol conversion module comprises:
a de-binding unit configured to de-bind video data acquired from the 4×E1 terminal; and
a first de-multiplexing unit configured to perform a Transport Stream (TS) de-multiplexing processing on the video data de-bound by the de-binding unit.

9. The MCU according to claim 7, **characterized in that** the protocol conversion module comprises:
a second de-multiplexing unit configured to de-multiplex video data acquired from the E1 terminal; and
a generation unit configured to form one frame of image with the video data de-multiplexed by the second de-multiplexing unit and package the frame of image.

10. The MCU according to claim 7, **characterized by** further comprising:
a media conversion module configured to perform code rate conversion or media format conversion on the acquired data.

11. The MCU according to claim 10, **characterized in that** the media conversion module comprises:
a decoding unit configured to form one frame of image with acquired video data and then perform decoding; and
an encoding unit configured to encode and package the video data output from the decoding unit.
